# EUROPÄISCHE PATENTSCHRIFT

(11) **EP 2 979 348 B1**
(45) Veröffentlichungstag und Bekanntmachung des Hinweises auf die Patenterteilung: **29.04.2020**
(21) Anmeldenummer: 13711903.8
(22) Anmeldetag: 25.03.2013
(51) Int. Cl.: H02K 11/215, H02K 11/33, H02K 9/22, F04D 29/58, F04D 13/06

(54) **ELEKTRONISCHE KFZ-FLUIDPUMPE**
MOTOR VEHICLE ELECTRONIC FLUID PUMP
POMPE ELECTRONIQUE DE FLUIDE POUR VÉHICULE AUTOMOBILE

(43) Veröffentlichungstag der Anmeldung: 03.02.2016
(73) Patentinhaber: Pierburg Pump Technology GmbH, 41460 Neuss (DE)
(72) Erfinder: Bürger, Frank, 52379 Langerwehe (DE); MALVASI, Alessandro, I-57125 Livorno (IT); OBERHOFF, Stefan, 59494 Soest (DE); SCHUMACHERS, Martin, 41366 Schwalmtal (DE); SPIERTZ, Harald, 50858 Köln (DE); KOPMEIER, Felix, Kosmas, 40549 Düsseldorf (DE); WULF, Andreas, 40591 Düsseldorf (DE); HAASE, Michael, 64711 Erbach (DE); SCHRÖDER, Viktor, 41462 Neuss (DE)
(74) Vertreter: terpatent Patentanwälte ter Smitten Eberlein-Van Hoof Rütten Daubert
(86) Internationale Anmeldenummer: PCT/EP2013/056286
(87) Internationale Veröffentlichungsnummer: WO 2014/154240

(56) Entgegenhaltungen:
- EP-A1- 2 476 914
- EP-A2- 2 312 731
- DE-A1- 10 114 667
- DE-U1-202008 008 644
- US-A1- 2003 063 449
- US-A1- 2010 328 901

## Beschreibung

Die Erfindung betrifft eine elektronische Kfz-Fluidpumpe mit einem elektronisch kommutierten Antriebsmotor, der eine elektronische Motorsteuerung mit mehreren Platinen aufweist.

Eine Platine ist ein plattenförmiges Element, an der oder auf dem elektronische Bauelemente befestigt und mit elektrischer Energie und/oder Signalen versorgt oder beaufschlagt werden können. Die Bauelemente sind durch Leiterbahnen miteinander verbunden.

In einer elektronischen Motorsteuerung für einen elektronisch kommutierten Antriebsmotor sind Leistungshalbleiter zur unmittelbaren Ansteuerung der Motorspulen und Signalverarbeitungs-Halbleiter für die logische Steuerung vorgesehen. Die Leistungshalbleiter erzeugen viel Wärme, durch die die Signalverarbeitungs-Elektronik unter Umständen negativ beeinflusst wird. Ferner können durch die Leistungshalbleiter bei steilen Schaltflanken starke Störungen in die Signalverarbeitungs-Bauelemente induziert werden.

Aus US 2010/0328901 A1 ist eine Motorsteuerung bekannt, bei der mehrere Elektronik-Module durch steife Leiter elektrisch miteinander verbunden sind.

Aus DE 10114667 A1 ist eine Motorsteuerung bekannt, bei der auf einem einzigen flexiblen Körper die Leistungselektronik, die Signalverarbeitung und die Motorspulen angeordnet sind.

DE 20 2008 08644 U1 offenbart eine Motorsteuerung, die größtenteils auf einer flexiblen gedruckten Schaltung angeordnet ist.

EP 2 312 731 A1 offenbart eine Motorsteuerung, die funktional auf zwei getrennte Platinen aufgeteilt ist.

Aus EP 2 476 914 A1, die den nächstkommenden Stand der Technik offenbart, ist eine elektronische Kfz-Fluidpumpe mit einem elektronisch kommutierten Antriebsmotor bekannt, der eine elektronische Motorsteuerung aufweist.

Aus US 2003 0063449 A1 ist eine Tintenstrahldrucker-Steuerung offenbart, die von einer starren Platine und einer flexiblen Platine gebildet wird, durch die zwei Druckköpfe angesteuert werden.

Der Erfindung liegt daher die Aufgabe zugrunde, eine elektronische Kfz-Fluidpumpe mit einer kompakten elektronischen Motorsteuerung zu schaffen, die eine gute elektrische und thermische Trennung verschiedener elektronischer Baugruppen voneinander erlaubt,

Die Lösung der Aufgabe erfolgt erfindungsgemäß durch eine Kfz-Fluidpumpe mit den Merkmalen des Anspruch 1. Die elektronische Motorsteuerung weist eine erste Hauptplatine und eine zweite Hauptplatine auf. Diese beiden Hauptplatinen tragen die elektronischen Bauteile verschiedener elektronischer Baugruppen. Zwischen den beiden Hauptplatinen ist eine Zwischenplatine in einer von der Orientierung der Hauptplatinen abweichenden Raumebene angeordnet. Die Zwischenplatine ist jeweils mit einem flexiblen Leitungsband mit den beiden Hauptplatinen elektrisch verbunden und verbindet die beiden Hauptplatinen sowohl mechanisch als auch elektrisch auf diese Weise miteinander. Zudem weist die Zwischenplatine mindestens ein elektronisches Bauteil auf.

In der bevorzugten Ausführungsform sind die beiden Hauptplatinen im Verhältnis zur Zwischenplatine jeweils deutlich größer ausgeführt. Demzufolge weisen die Hauptplatinen eine deutlich größere Anzahl an elektronischen Bauteilen auf.

Die erste Hauptplatine weist Leistungshalbleiter und die zweite Hauptplatine weist Signalverarbeitungs-Bauelemente auf. Durch die funktional getrennte Anordnung der Bauteile auf verschiedenen Platinen werden die Bauteile neben der räumlichen Trennung auch thermisch und elektrisch gut voneinander getrennt.

Auf diese Weise wird verhindert, dass die Signalverarbeitungs-Bauelemente durch die Leistungshalbleiter stark erwärmt oder auf andere Weise beeinflusst werden.

Durch die flexiblen Leitungsbänder und die Zwischenplatine wird die Wärmeübertragung minimiert. Zudem wird durch die flexiblen Leitungsbänder eine beliebige Faltung ermöglicht, so dass ein sehr kompakter Aufbau realisiert werden kann. Durch die Zwischenplatine können die beiden Hauptplatinen auch elektrisch voneinander entkoppelt werden.

Die Motorsteuerung wird durch eine flexible Platinenstruktur gebildet. Es stehen durch die Faltmöglichkeiten große Bestückungsflächen zur Verfügung. Hierdurch wird eine einfach herstellbare und mechanisch sichere Kontaktierung der Bauteile ermöglicht.

In einer bevorzugten Ausführung weist die erste Hauptplatine mehrere Leistungshalbleiter auf und bildet eine Leistungsplatine. Da alle Leistungshalbleiter auf der ersten Hauptplatine angeordnet sind, weist die zweite Hauptplatine keine Leistungshalbleiter auf. Die erste Hauptplatine sollte für eine guten Kühlung optimal platziert werden. Die zweite Hauptplatine kann für die Vermeidung langer Signalwege näher an die Signalleitung der Motorsteuerung platziert werden. So können beiden Hauptplatinen bezüglich ihrer Funktion optimal angeordnet werden.

In einem weiteren Ausführungsbeispiel weist die zweite Hauptplatine mehrere Signalverarbeitungs-Bauelemente sowie einen Prozessor auf, und bildet eine Signalverarbeitungsplatine. Sowohl die Leistungsplatine, als auch die Signalverarbeitungsplatine sind modular aufgebaut. Durch den streng modularen Aufbau können Schaltungsänderungen innerhalb der Leistungselektronik oder der Signalverarbeitungs-Bauelemente einfacher vorgenommen werden, da das Leiterbahnen-Layout des jeweils anderen Moduls hierdurch nicht beeinflusst wird.

In einer weiteren Ausführungsform weist die Motorsteuerung eine schmetterlingsartige Symmetrie der beiden aufgeklappten Hauptplatinen auf. Diese Anordnung bewirkt, dass sich die Leistungsplatine und die Signalverarbeitungsplatine im zusammengeklappten Zustand jeweils gegenseitig annähernd vollständig überlappen. Dieser zusammengefaltete Zustand entspricht dem Gebrauchszustand der Motorsteuerung.

Die beiden Hauptplatinen können über die Zwischenplatine zueinander Z-förmig angeordnet sein. Besonders bevorzugt ist allerdings, dass die beiden Hauptplatinen und die Zwischenplatine U-förmig zueinander angeordnet sind. Bei der U-förmigen Faltung wird die Querverbindung zwischen den beiden Hauptplatinen durch die Zwischenplatine gebildet. Gleichzeitig ist durch die Zwischenplatine der Abstand der beiden Hauptplatinen zueinander definiert.

In einer weiteren Ausführungsform sind die flexiblen Leitungsbänder jeweils einstückig und steckerfrei mit der zugeordneten Hauptplatine und der Zwischenplatine verbunden. Alle Platinen der Motorsteuerung und die Leitungsbänder bestehen demnach aus einem einzigen Teil. Die flexiblen Leitungsbänder, die die Platinen miteinander verbinden, sind dadurch gebildet, dass der Platinenkörper in diesen Bereichen eine erheblich verringerte Materialstärke aufweist. Die Verringerung der Materialstärke wird durch materialabtragende Verfahren, wie beispielsweise Fräsen, erreicht. Hierdurch werden die flexiblen Leitungsbänder erzeugt. Diese flexiblen Leitungsbänder können allerdings nicht beliebig oft oder in einem engen Radius gebogen werden. Ein einmaliges Verbiegen, wie es für die Montage ausreichend ist, erlauben die flexiblen Leitungsbänder jedoch.

Durch die einstückige Ausführung müssen keine Stecker zur Verbindung der Leitungsbänder und der Platinen vorgesehen werden. Die Einstückigkeit vermeidet Fehler beim Zusammenbau oder der Montage, führt zu einer Gewichtsreduktion und stellt eine zuverlässige elektrische Verbindung dar, da fehlerhafte Steckerverbindungen ausgeschlossen sind.

Die flexiblen Leitungsbänder und Platinen bestehen beispielsweise aus Polyester, Polyethlyennaphtalat oder Polyamid. Die flexiblen Leitungsbänder haben den Vorteil, dass sich ihre Form auch komplexeren Formen von Gehäusen anpassen kann, d.h. der Innenraum des Gehäuses kann besonders effizient genutzt werden. Die flexiblen Leitungsbänder sind in der Regel so flexibel, dass sie eine Biegung an einer Biegekante um einen Winkel von bis zu 120° erlauben, wobei in der Praxis schon ein Biegewinkel im Bereich von 90° in der Regel genügt.

In einer weiteren Ausführungsform ist auf der Zwischenplatine eine Signalentkopplungs-Elektronik angeordnet. Diese Signalentkopplungs-Elektronik kann sowohl passive, als auch aktive elektronische Bauteile aufweisen. Durch das Vorsehen der Signalentkopplungs-Elektronik auf der Zwischenplatine wird verhindert, dass Störsignale aus der Signalverarbeitungs-Elektronik in die Leistungs-Elektronik und/oder umgekehrt übertragen werden. Die Isolation der Leistungs-Elektronik durch die Signalentkopplungs-Elektronik auf der Zwischenplatine verhindert zuverlässig, dass Störungen der Leistungselektronik in das Bordnetz der Kfz-Elektronik eingespeist werden.

In einer weiteren Ausführungsform ist eine separate Sensorplatine vorgesehen, die über ein weiteres flexibles Leitungsband mit jeweils einer der beiden Hauptplatinen, bevorzugt mit der Signalverarbeitungsplatine, verbunden ist. Die Signalverarbeitungsplatine kann auf diese Weise in die Nähe der Signalabnahme gebracht werden. Dadurch wird eine bessere Signalqualität ermöglicht. Die Signalverarbeitungsplatine kann bevorzugt einstückig mit der betreffenden Hauptplatine ausgebildet sein, so dass, bezogen auf die Herstellung, keine weitere Platine separat hergestellt werden muss.

In einer weiteren Ausführungsform ist die Signalverarbeitungsplatine zweiseitig bestückt. Durch die zweiseitige Bestückung wird eine größere bestückbare Fläche geschaffen.

In einer weiteren Ausführungsform ist die Leistungsplatine einseitig bestückt. Die eine Seite der Leistungsplatine ist dabei mit elektronischen Bauteilen bestückt. Über die unbestückte Seite der Leistungsplatine kann die Wärme abgeführt werden, indem die unbestückte Seite unmittelbar auf einem Kühlkörper vollständig aufgebracht ist.

In einer weiteren Ausführungsform ist die unbestückte Seite der Leistungsplatine über ein Wärmeleitmittel mit dem Gehäuse eines Spalttopfes thermisch verbunden. Der Spalttopf wird auf der nassen Seite von dem Fluid umspült und dadurch ständig gekühlt. Dieser Ort stellt sich als sehr geeignet für die Kühlung der Leistungselektronik dar.

Die Übertragung der Wärme von der Bestückungsseite zur unbestückten Seite kann mittels Durchkontaktierung verbessert werden.

Über das Wärmeleitmittel wird eine homogene Wärmeverteilung bewirkt, die es darüber hinaus ermöglicht, die Temperaturerfassung zu optimieren und höhere Verlustleistungen in den Leistungsbauelementen zu ermöglichen.

In einer weiteren Ausführungsform ist die Sensorplatine mit einem Rotorlagensensor, vorzugsweise einem Hallsensor, bestückt. Durch diesen Hallsensor kann die aktuelle Position des Motorrotors detektiert werden.

In einer weiteren Ausführungsform ist/sind die Leistungsplatine und/oder die Signalverarbeitungsplatine durch mindestens ein Rastelement in dem Gehäuse fixiert. Die Verbindung zwischen der Rastausnehmung und dem Rastelement wirkt der Federkraft der flexiblen Leitungsbänder entgegen.

Besonders positionssicher kann die Platine an dem Gehäuse fixiert werden, wenn an den Rändern der Platine Rastausnehmungen, sowie an dem Gehäuse entsprechende Rastelemente, vorgesehen sind. Besonders in der Einbausituation wird eine lagerichtige Positionierung der Platine erreicht, bevor ein Deckel des Motorgehäuses aufgesetzt wird. Dadurch ist eine gute Kontrolle der Positionierung sichergestellt.

Nachfolgend wird die Erfindung an Hand einer bevorzugten Ausführungsform unter Bezugnahme auf die anliegenden Zeichnungen näher erläutert:
Es zeigen:
Figur 1: einen Längsschnitt einer elektronischen Kfz-Fluidpumpe mit einer eingebauten flexiblen Leiterplattenstruktur,
Figur 2: eine perspektivische Darstellung der flexiblen Leiterplattenstruktur im aufgeklappten Zustand,
Figur 3: eine Darstellung der flexiblen Leiterplattenstruktur mit einer umgeklappten Sensorplatine, und
Figur 4: eine Draufsicht auf die flexible Leiterplattenstruktur.

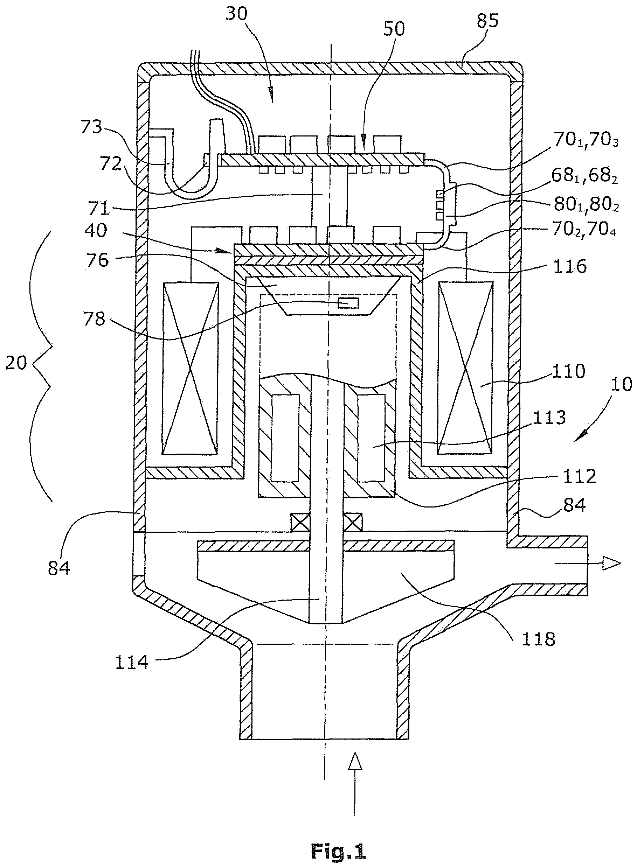

In der Figur 1 ist eine elektronische Kfz-Fluidpumpe 10 in einem Längsschnitt dargestellt. Die Kfz-Fluidpumpe 10 dient der Versorgung eines Kfz-Verbrennungsmotors mit einem Kühlmittel, vorzugsweise Wasser. Die elektronische Kfz-Fluidpumpe 10 weist im Wesentlichen ein Motorgehäuse 84 mit einem Motorgehäusedeckel 85 auf, in dem ein elektronisch kommutierter Antriebsmotor 20 angeordnet ist. Der Antriebsmotor 20 weist statorseitig einen Motorstator 110 und rotorseitig einen Motorrotor 112 mit eingelassenen Permanentmagneten 113 auf.

Der elektronisch kommutierte Antriebsmotor 20 weist einen Spalttopf 116 auf, so dass der gesamte Motorrotor 112 einschließlich der Permanentmagnete 113 im nassen Bereich angeordnet ist. Der Motorrotor 112 ist über eine Motorrotorwelle 14 mit einem Pumpenlaufrad 118 drehfest verbunden. Der Motorstator 110 ist durch den Spalttopf 116 flüssigkeitsdicht abgeschirmt. Der Nassbereich ist durch den Spalttopf 116 vom trockenen Motorstator 110 und einer elektronischen Motorsteuerung 30 getrennt.

Die Motorsteuerung 30 weist eine flexible Platinenstruktur mit einer ersten Hauptplatine 40 und einer zweiten Hauptplatine 50 auf. Zwischen der ersten Hauptplatine 40 und der zweiten Hauptplatine 50 sind über flexible Leitungsbänder 70₁-70₄ zwei Zwischenplatinen 80₁-80₂ angeordnet. Die beiden Hauptplatinen 40, 50 und die Zwischenplatinen 80₁-80₂ sind im eingebauten Zustand U-förmig zueinander gefalten, so dass sich die erste Hauptplatine 40 und die zweite Hauptplatine 50 einander gegenüberliegen.

Die erste Hauptplatine 40 ist einseitig bestückt. Die zweite Hauptplatine 50 ist zweiseitig bestückt. Die unbestückte Seite der ersten Hauptplatine 40 ist über ein Wärmeleitmittel mit dem Spalttopf 116 thermisch verbunden. Die Motorsteuerung 30 weist ferner eine Sensorplatine 76 auf. Diese Sensorplatine 76 ist elektrisch mit der zweiten Hauptplatine 50 verbunden und ist mit einem Rotorlagensensor 78 bestückt. In der hier dargestellten Ausführungsform ist der Rotorlagensensor 78 durch einen Hallsensor realisiert. Der Rotorlagensensor 78 der Sensorplatine 76 ist im Bereich des Motorrotors 112 angeordnet.

Die zweite Hauptplatine 50 ist über mindestens eine Rastausnehmung 72 mittels eines gehäuseseitigen Rastelementes 73 in dem Motorgehäuse 84 der elektronischen Kfz-Fluidpumpe 10 fixiert. Die Verbindung zwischen der Rastausnehmung 72 und dem Rastelement 73 ist derart angeordnet, dass diese der Federkraft der flexiblen Leistungsbänder 70₁-70₄ entgegenwirkt.

Die unbestückte Seite der ersten Hauptplatine 40 ist über ein Wärmeleitmittel auf den Spalttopf 116 aufgebracht. In dieser Situation liegt die flexible Leiterplattenstruktur noch in einem ungefaltenen Zustand vor. Wird folgend der Deckel 85 des Motorgehäuses 84 der elektronischen Kfz-Fluidpumpe 10 auf den Spalttopf 116 aufgesetzt, so verformen sich die flexiblen Leitungsbänder 70₁-70₄ und die erste Hauptplatine 40 und die zweite Hauptplatine 50 kommen über die Zwischenplatinen 80₁-80₂ in einer U-förmigen Ausgestaltung zu liegen.

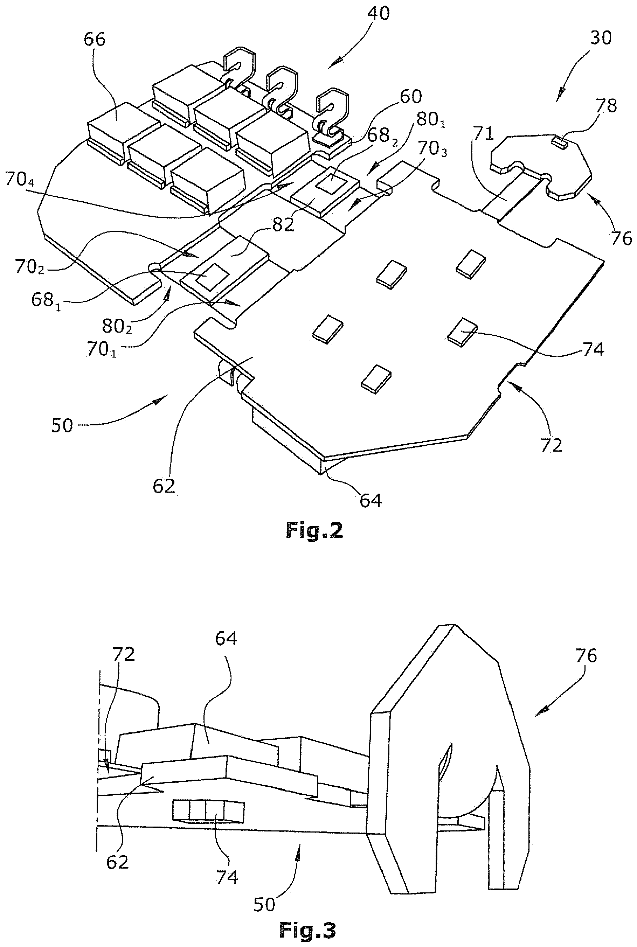

In der Figur 2 ist die Motorsteuerung 50 aus der Figur 1 im aufgeklappten Zustand dargestellt. Die Motorsteuerung 50 weist zwei Hauptplatinen 40, 50 und zwei Zwischenplatinen 80₁-80₂ auf, die mechanisch und elektrisch über flexible Leitungsbänder 70₁-70₄ verbunden oder miteinander gekoppelt sind. Die flexiblen Leitungsbänder 70₁-70₄ sind dabei einstückig und steckerfrei mit der ersten Hauptplatine 40 und der zweiten Hauptplatine 50 sowie mit den Zwischenplatinen 80₁-80₂ verbunden. Die erste Hauptplatine 40 ist einseitig bestückt. Auf der bestückten Seite umfasst die erste Hauptplatine 40 mehrere Leistungshalbleiter 66. Sie stellt die Leistungsplatine 60 dar. Die erste Hauptplatine 40 ist die über flexiblen Leitungsbändern 70₁-70₄ mit einer zweiten Hauptplatine 50 elektrisch und mechanisch verbunden. Auf den flexiblen Leistungsbändern 70₁-70₄ sind zwei Zwischenplatinen 80₁-80₂ angeordnet. Diese Zwischenplatinen 80₁-80₂ umfassen mindestens ein elektronisches Bauteil 68₁-68₂. Dieses elektronische Bauteil 68₁-68₂ bildet beispielsweise eine Signalentkopplungs-Elektronik 82.

Die zweite Hauptplatine 50 ist im Gegensatz zur ersten Hauptplatine 40 zweiseitig bestückt. Die zweite Hauptplatine 40 weist beispielsweise mehrere Signalverarbeitungs-Bauelemente 74 auf der einen bestückten Seite und den Prozessor 64 auf der anderen bestückten Seite auf. Die zweite Hauptplatine 50 stellt die Signalverarbeitungsplatine 62 dar. Die Grundfläche der zweiten Hauptplatine 50 weist eine Rastausnehmung 72 auf, mit der die flexible Leiterplatine über ein Rastelement 73 an dem Motorgehäuse 84 fixiert ist.

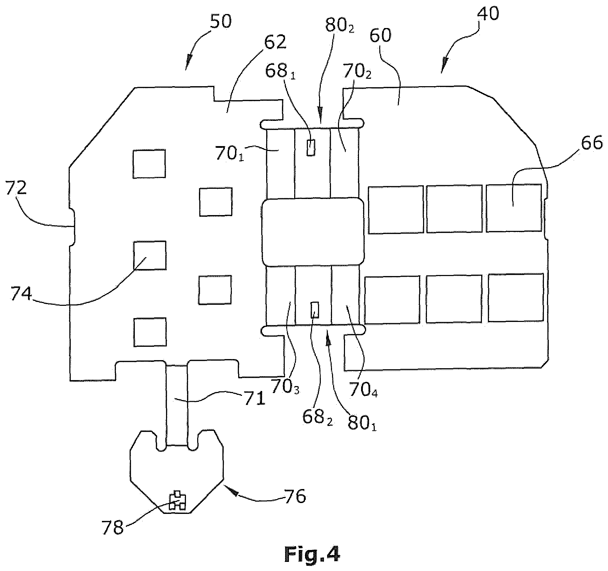

Über ein weiteres flexibles Leitungsband 71 ist eine separate Sensorplatine 76 mit der Signalverarbeitungsplatine 62 verbunden. Die Signalverarbeitungsplatine 62 umfasst mindestens einen Rotorlagensensor 78. Der Rotorlagensensor 78 ist als Hallsensor ausgebildet, wie in der Figur 4 zu sehen ist.

Insgesamt weist die aufgeklappte Anordnung der ersten Hauptplatine 40 und der zweiten Hauptplatine 50 eine schmetterlingsartige Symmetrie auf.

In der Figur 3 ist eine Darstellung der flexiblen Leiterplattenstruktur mit einer umgeklappten Sensorplatine 76 dargestellt. Die umgeklappte Sensorplatine 76 liegt dabei in einer von der zweiten Hauptplatine 50 abweichenden Raumebene. Über ein weiteres flexibles Leitungsband 71 ist die Sensorplatine 76 mechanisch und elektrisch mit der zweiten Hauptplatine 50 verbunden. Dabei liegt, vergleichbar mit den flexiblen Leitungsbändern 70₁-70₄, eine einstückige und steckerfreie Verbindung vor.

Die Sensorplatine 76 weist einen Rotorlagensensor 78 für die Detektion der aktuellen Position des Motorrotors 112 auf. Der Rotorlagensensor 78 ist in diesem Ausführungsbeispiel als Hallsensor ausgeführt. Der Hallsensor ist im Randbereich der Sensorplatine 76 angeordnet.

In der Figur 4 ist eine Draufsicht der flexiblen Leiterplattenstruktur mit den aufgebrachten elektronischen Bauteilen 68₁-68₂ dargestellt.
- 10: Elektronische Kfz-Fluidpumpe
- 20: Elektronisch kommutierter Antriebsmotor
- 30: Elektronische Motorsteuerung
- 40: Erste Hauptplatine
- 50: Zweite Hauptplatine
- 60: Leistungsplatine
- 62: Signalverarbeitungsplatine
- 64: Prozessor
- 66: Leitungshalbleiter
- 68₁-68₂: Elektronisches Bauteil
- 70₁-70₄: Flexibles Leitungsband Zwischenplatine
- 71: Flexibles Leitungsband Sensorplatine
- 72: Rastausnehmung
- 73: Rastelement
- 74: Signalverarbeitung
- 76: Sensorplatine
- 78: Rotorlagensensor
- 80₁-80₂: Zwischenplatine
- 82: Signalentkopplungs-Elektronik
- 84: Motorgehäuse
- 85: Motorgehäuse-Deckel
- 110: Motorstator
- 112: Motorrotor
- 113: Permanentmagnet
- 114: Motorrotorwelle
- 116: Spalttopf
- 118: Pumpenlaufrad
- 120: Statorspulen

## Patentansprüche

1. Elektronische Kfz-Fluidpumpe (10) mit einem elektronisch kommutierten Antriebsmotor (20), der einen Motorrotor (112), der über eine Motorrotorwelle (14) mit einem Pumpenlaufrad (118) drehfest verbunden ist, und eine elektronische Motorsteuerung (30) aufweist, **dadurch gekennzeichnet dass** die Motorsteuerung (30) eine erste Hauptplatine (40) und eine zweite Hauptplatine (50) aufweist,
die Motorsteuerung (30) mindestens eine Zwischenplatine (80₁-80₂) aufweist, die zwischen den beiden Hauptplatinen (40, 50) angeordnet und mit jeweils mindestens einem flexiblen Leitungsband (70₁-70₄) mit den beiden Hauptplatinen (40, 50) elektrisch verbunden ist, auf der Zwischenplatine (80₁-80₂) mindestens ein elektronisches Bauteil (68₁-68₂) angeordnet ist,
die beiden Hauptplatinen (40,50) und die Zwischenplatine (80₁-80₂) jeweils in verschiedenen Raumebenen angeordnet sind,
die erste Hauptplatine (40) eine Leistungsplatine (60) bildet, die mehrere und alle Leistungshalbleiter (66) aufweist, und
die zweite Hauptplatine (50) eine Signalverarbeitungsplatine (62) bildet, die die Signalverarbeitungs-Bauelemente (74) und bevorzugt einen Prozessor (64) aufweist.

2. Elektronische Kfz-Fluidpumpe (10) gemäß Anspruch 1, wobei die Motorsteuerung (30) eine schmetterlingsartige Symmetrie der beiden aufgeklappten Hauptplatinen (40, 50) aufweist.

3. Elektronische Kfz-Fluidpumpe (10) gemäß einem der vorangehenden Ansprüche, wobei die beiden Hauptplatinen (40,50) und die Zwischenplatinen (80₁-80₂) U-förmig zueinander gefaltet sind.

4. Elektronische Kfz-Fluidpumpe (10) gemäß einem der vorangehenden Ansprüche, wobei die flexiblen Leitungsänder (70₁-70₄) jeweils einstückig und steckerfrei mit der zugeordneten Hauptplatine (40,50) und den Zwischenplatinen (80₁-80₂) verbunden sind.

5. Elektronische Kfz-Fluidpumpe (10) gemäß einem der vorangehenden Ansprüche, wobei auf den Zwischenplatinen (80₁-80₂) eine Signalentkopplungs-Elektronik (82) angeordnet ist.

6. Elektronische Kfz-Fluidpumpe (10) gemäß einem der vorangehenden Ansprüche, wobei eine separate Sensorplatine (76) vorgesehen ist, die über ein weiteres flexibles Leitungsband (71) jeweils mit einer der beiden Hauptplatinen (40,50), bevorzugt mit der Signalverarbeitungsplatine (62) verbunden ist.

7. Elektronische Kfz-Fluidpumpe (10) gemäß einem der vorangehenden Ansprüche, wobei die Signalverarbeitungsplatine (62) zweiseitig bestückt ist.

8. Elektronische Kfz-Fluidpumpe (10) gemäß einem der vorangehenden Ansprüche, wobei die Leistungsplatine (60) einseitig bestückt ist,

9. Elektronische Kfz-Fluidpumpe (10) gemäß einem der vorangehenden Ansprüche, wobei die unbestückte Seite der Leistungsplatine (60) über ein Wärmeleitmittel mit einem Spalttopf-Gehäuse (116) thermisch verbunden ist.

10. Elektronische Kfz-Fluidpumpe (10) gemäß einem der vorangehenden Ansprüche, wobei die Sensorplatine (76) mit einem Rotorlagensensor (78), vorzugsweise einem Hallsensor, bestückt ist.

11. Elektronische Kfz-Fluidpumpe (10) gemäß einem der vorangehenden Ansprüche, wobei die Leistungsplatine (60) und/oder die Signalverarbeitungsplatine (62) durch mindestens ein Rastelement (73) in dem Gehäuse (84) fixiert ist bzw. sind, die der Federkraft der flexiblen Leitungsbänder (70₁-70₄) entgegenwirkt.

## Claims

1. An electronic vehicle fluid pump (10) including an electronically commutated drive motor (20) having a motor rotor (112) connected for rotation with an impeller via a motor rotor shaft (14), and comprising an electronic motor control unit (30),
**characterized in that**
said motor control unit (30) comprises a first main board (40) and a second main board (50),
said motor control unit (30) comprises at least one intermediate board (80₁-80₂) which is arranged between said two main boards (40, 50) and respectively electrically connected with said two main boards (40, 50) by means of at least one flexible conduction band (70₁-70₄),
wherein on said intermediate board (80₁-80₂) at least one electronic component (68₁-68₂) is arranged, and
wherein said two main boards (40, 50) and said intermediate board (80₁-80₂) are respectively arranged at different spatial dimensions,
wherein the first main board (40) defines a power board (60) which comprises a plurality of power semiconductors (66), and
wherein the second main board (50) defines a signal-processing board (62) which comprises the signal-processing components (74) and preferably a processor (64).

2. The electronic vehicle fluid pump (10) according to claim 1, **wherein** the motor control unit (30) has a butterfly-type symmetry of the two unfolded main boards (40, 50).

3. The electronic vehicle fluid pump (10) according to any one of the preceding claims, **wherein** the two main boards (40, 50) and the intermediate boards (80₁-80₂) are folded with respect to each other to form a U-shape.

4. The electronic vehicle fluid pump (10) according to any one of the preceding claims, **wherein** the flexible conduction bands (70₁-70₄) are respectively connected integrally and in a plug-free manner with the associated main board (40, 50) and the intermediate boards (80₁-80₂).

5. The electronic vehicle fluid pump (10) according to any one of the preceding claims, **wherein** on the intermediate boards (80₁-80₂) a signal-decoupling electronic unit (82) is arranged.

6. The electronic vehicle fluid pump (10) according to any one of the preceding claims, **wherein** a separate sensor board (76) is provided which is respectively connected with one of the two main boards (40, 50), preferably with the signal-processing board (62), via another flexible conduction band (71).

7. The electronic vehicle fluid pump (10) according to any one of the preceding claims, **wherein** the signal-processing board (62) is populated on two sides.

8. The electronic vehicle fluid pump (10) according to any one of the preceding claims, **wherein** the power board (60) is populated on one side.

9. The electronic vehicle fluid pump (10) according to any one of the preceding claims, **wherein** the unpopulated side of the power board (60) is thermally connected with a separating can housing (116) via a heat conduction means.

10. The electronic vehicle fluid pump (10) according to any one of the preceding claims, **wherein** the sensor board (76) is populated with a rotor position sensor (78), preferably a Hall sensor.

11. The electronic vehicle fluid pump (10) according to any one of the preceding claims, **wherein** the power board (60) and/or the signal-processing board (62) is/are fixed in the housing (84) via at least one latch element (73), counteracting the spring force of the flexible conduction bands (70₁-70₄).

## Revendications

1. Pompe à fluide électronique automobile (10) comprenant un moteur d'entrainement à commutation électronique (20) ayant un rotor de moteur (112) relié, de manière solidaire en rotation, avec une roue de pompe (118) par un arbre (14) du rotor de moteur, et ayant une commande de moteur électronique (30),
**caractérisée en ce que**
la commande de moteur (30) comprend une première carte principale (40) et une deuxième carte principale (50),
la commande de moteur (30) a au moins une carte intermédiaire (80₁-80₂) qui est disposée entre les deux cartes principales (40, 50) et est connectée électriquement aux deux cartes principales (40, 50) par au moins une bande de conduction flexible (70₁ - 70₄),
au moins un composant électronique (68₁-68₂) est disposé sur les cartes intermédiaires (80₁-80₂),
les deux cartes principales (40, 50) et les cartes intermédiaires (80₁-80₂) sont chacune disposées à différents plans spatiaux,
la première carte mère (40) forme une carte de puissance (60) ayant une pluralité de semi-conducteurs de puissance (66), et
la deuxième carte principale (50) forme une carte de traitement de signal (62) qui a les composants de traitement de signal (74) et, de préférence, un processeur (64).

2. Pompe à fluide électronique automobile (10) selon la revendication 1, dans laquelle la commande de moteur (30) présente une symétrie en papillon des deux cartes principales ouvertes (40, 50).

3. Pompe à fluide électronique automobile (10) selon l'une quelconque des revendications précédentes, dans laquelle les deux cartes principales (40, 50) et les cartes intermédiaires (80₁-80₂) sont pliées en forme de U l'une par rapport à l'autre.

4. Pompe à fluide électronique automobile (10) selon l'une quelconque des revendications précédentes, dans laquelle les bandes de conduit flexibles (70₁ - 70₄) sont chacune connectée solidaire et sans fiche à la carte principale associée (40, 50) et aux cartes intermédiaires (80₁ -80₂).

5. Pompe à fluide électronique automobile (10) selon l'une quelconque des revendications précédentes, dans laquelle une électronique de découplage de signal (82) est disposée sur les cartes intermédiaires (80₁-80₂).

6. Pompe à fluide électronique automobile (10) selon l'une quelconque des revendications précédentes, dans laquelle une carte de capteur (76) séparée est prévue, qui est connectée via une autre bande de conduction flexible (71) avec l'une des deux cartes principales (40, 50), de préférence avec la carte de traitement du signal (62).

7. Pompe à fluide électronique automobile (10) selon l'une quelconque des revendications précédentes, dans laquelle la carte de traitement de signal (62) est équipée sur les deux côtés.

8. Pompe à fluide électronique automobile (10) selon l'une quelconque des revendications précédentes, dans laquelle la carte de puissance (60) est équipée sur un côté.

9. Pompe à fluide électronique automobile (10) selon l'une quelconque des revendications précédentes, dans laquelle le côté non-équipé de la carte de puissance (60) est relié thermiquement à un boitier de confinement (116) via un agent conducteur de chaleur.

10. Pompe à fluide électronique automobile (10) selon l'une quelconque des revendications précédentes, dans laquelle la carte de capteur (76) est équipée d'un capteur de position de rotor (78), de préférence un capteur à effet Hall.

11. Pompe à fluide électronique pour automobile (10) selon l'une quelconque des revendications précédentes, dans laquelle la carte de puissance (60) et/ou la carte de traitement du signal (62) est ou sont fixées par au moins un élément de verrouillage (73) dans le boîtier (84), qui s'oppose à la force de ressort des bandes de conduction flexibles (70₁-70₄).
